# EUROPÄISCHE PATENTSCHRIFT

(11) **EP 2 095 921 B1**
(45) Veröffentlichungstag und Bekanntmachung des Hinweises auf die Patenterteilung: **17.04.2013**
(21) Anmeldenummer: 09001930.8
(22) Anmeldetag: 12.02.2009
(51) Int. Cl.: B27D 5/00

(54) **Einrichtung zum Zuführen von Kantenstreifen**
Device for supplying edge strips
Dispositif de guidage de bandes de rebords

(30) Priorität: 27.02.2008 DE 102008011313
(43) Veröffentlichungstag der Anmeldung: 02.09.2009
(73) Patentinhaber: IMA Klessmann GmbH Holzbearbeitungssysteme, 32312 Lübbecke (DE)
(72) Erfinder: Seifert, Uwe, 32361 Preussisch Oldendorf (DE)
(74) Vertreter: Schober, Mirko

(56) Entgegenhaltungen:
- DE-A1- 2 722 225
- DE-U- 7 031 331
- DE-U1- 8 002 483

## Beschreibung

Die Erfindung bezieht sich auf eine Einrichtung gemäß den Merkmalen des Oberbegriffs des Patentanspruchs 1.

In bekannter Ausführung weisen solche Zuführ-Einrichtungen eine Schubvorrichtung auf, die mit einem die Kantenstreifen-Greifer tragenden Schlitten versehen sind. Folglich können alle Greifer nur gemeinsam verfahren werden, wobei der Schlitten zwischen einer zum vor der Anpreßvorrichtung angeordneten Kanal hin liegenden sowie einer davon abliegenden Position verfahrbar ist. Bei einem Wechsel von dem verarbeiteten Kantenstreifen zu einem anderen, zu verarbeitenden Kantenstreifen verfährt der Schlitten der Schubvorrichtung zunächst von der zu dem genannten Kanal hin liegenden Position in die davon abliegende Position. Hierbei klemmt nur derjenige Greifer, der dem auszutauschenden Kantenstreifen zugeordnet ist, der entsprechend aus dem Kanal zurückgezogen wird. Die weiteren Greifer geben die jeweils durch sie hindurchgezogenen Kantenstreifen hierbei frei. Nachfolgend verfährt der Schlitten der Schubvorrichtung zu der zum Kanal hin liegenden Position hin und klemmt auf diesem Verfahrweg ausschließlich den nachfolgend zu verarbeitenden Kantenstreifen, um ihn in den Kanal vor der Anpreßvorrichtung einzuführen. Danach gibt dieser Greifer den von da ab zu verarbeitenden Kantenstreifen frei, er ist dann ebenso wie die übrigen Greifer am Schlitten nicht in Aktion. Um die jeweils nicht benötigten Kantenstreifen zu sichern, sind in Durchlaufrichtung vor der Schubvorrichtung weitere die Kantenstreifen klemmende Greifer vorgesehen, die feststehend angeordnet sind und die hinsichtlich des jeweils freizugebenden Kantenstreifens gesondert angesteuert werden müssen.

Des weiteren sind Zuführeinrichtungen für Kantenstreifen in anderer Ausführung z.B. aus DE 70 31 331 bekannt, bei denen der Rückzug des auszutauschenden Kantenstreifens und der Vorschub des danach zu verarbeitenden Kantenstreifens mittels Friktionswalzen oder Schiebern vorgenommen wird.

Der Erfindung liegt die Aufgabe zugrunde, eine Einrichtung der oben genannten Art zu schaffen, die sowohl vom baulichen Aufwand her als auch hinsichtlich der Steuerung der zurückzuziehenden und vorzuschiebenden Kantenstreifen einfacher ausführbar ist.

Diese Aufgabe wird bei einer Einrichtung der oben genannten Art mittels der kennzeichnenden Merkmale des Patentanspruchs 1 gelöst.

Für die erfindungsgemäße Lösung ist wesentlich, daß für die Betätigung jedes Kantenstreifens jeweils nur ein einziger Greifer der Schubvorrichtung benötigt wird. Jeder Greifer klemmt den ihm zugeordneten Kantenstreifen dauernd mit der einzigen Ausnahme, daß der jeweils zu verarbeitende Kantenstreifen von dem betreffenden Greifer nur in der zum Kanal an der Anpreßvorrichtung hin liegenden Position freigegeben wird.

Vorteilhafte Ausgestaltungsmerkmale der Erfindung ergeben sich aus den Unteransprüchen.

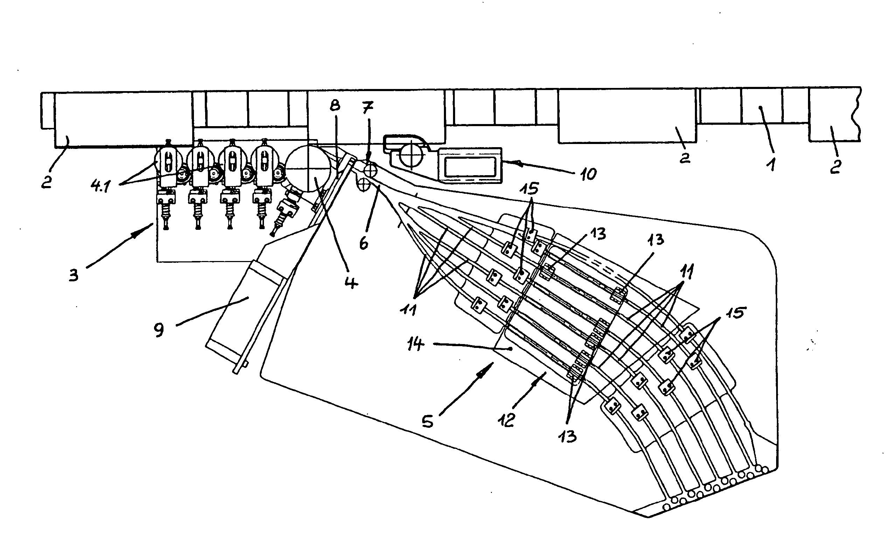

Die Erfindung wird nachfolgend anhand der Zeichnung an einem Ausführungsbeispiel noch näher erläutert. Die Zeichnung zeigt eine Zuführeinrichtung in der Draufsicht.

Im einzelnen erkennt man in der Zeichnung eine Transportvorrichtung 1, wie eine Transportkette, auf der plattenförmige Werkstücke 2 aus Holz oder Holzaustauschstoffen zu einer Kantenstreifen-Anpreßvorrichtung 3 hin transportiert werden. Die Anpreßvorrichtung 3 weist eine den jeweiligen Kantenstreifen zwischen sich und der zu beschichtenden Schmalseitenfläche der Werkstücke 2 verspannende Andruckrolle 4 auf, der Nachpreßrollen 4.1 nachgeordnet sind.

Der jeweils zu verarbeitende Kantenstreifen wird der Andruckrolle 4 der Anpreßvorrichtung 3 mittels einer Zuführeinrichtung 5 zugeführt, die hierzu einen bis zu der Andruckrolle 4 hinführenden Kanal 6 aufweist, an dem sich eine Einzugsvorrichtung 7 befindet, die aus Friktionsrollen besteht, zwischen denen der betreffende Kantenstreifen hindurchtransportiert wird. In Durchlaufrichtung des Kantenstreifens befindet sich hinter der Einzugsvorrichtung 7 eine Ablängvorrichtung 8, 9, die nach dem Durchlauf in passender Länge den Kantenstreifen durchtrennt. Die Ablängvorrichtung 8, 9 ist mit einem Messer 8 versehen, welches mittels eines pneumatischen Zylinders 9 betätigt wird. Vor dem Anfahren des Kantenstreifens an die jeweilige Schmalflächenseite der Werkstücke 2 kann eine auf der zur Werkstückschmalseite hin liegenden Seite vorhandener Kleber aktiviert oder ein Kleber auf die zu beschichtenden Werkstückschmalseiten aufgetragen werden, dazu dient eine mit 10 bezeichnete Vorrichtung.

Die Zuführeinrichtung 5 ist mit einer Mehr- oder Vielzahl von Streifenspuren 11 versehen, die längsseitig nebeneinander liegen. Jede Spur 11 nimmt einen Kantenstreifen auf, der von oben her in die Spur 11 eingelegt wird und von einem in der Zeichnung nicht dargestellten Magazin abzogen wird. Sämtliche Streifenspuren 11 münden in den Kanal 6 an der Anpreßvorrichtung 3, aus dem der nicht weiter zu verarbeitende Kantenstreifen zurückgezogen und in den hinein der andere, von jetzt an zu verarbeitende Kantenstreifen eingeführt wird. Dies besorgt eine Schubvorrichtung 12 mit einer der Anzahl der Streifenspuren 11 entsprechenden Zahl von Greifern 13, so daß jeder der Spuren 11 einer der Greifer 13 zugeordnet ist. Die Greifer 13 sind zangenförmig ausgebildet und weisen Klemmbacken auf, zwischen denen der der jeweiligen Streifenspur 11 zugeordnete Kantenstreifen hindurchgeführt ist. Jeder der Greifer 13 kann für sich zwischen einer Position, die dem zu der Anpreßvorrichtung 3 hinführenden Kanal 6 benachbart ist, und einer Position verfahren werden, die von dem Kanal 6 abliegt. In der Zeichnung befindet sich von oben her gesehen lediglich der zweite Greifer 13 in der dem Kanal 6 vor der Anpreßsvorrichtung 3 benachbarten Position.

Es handelt sich um denjenigen Greifer 13, der dem gegenwärtig zu verarbeitenden Kantenstreifen zugeordnet ist. Jeder der Greifer 13 gibt den ihm zugeordneten Kantenstreifen nur in dieser zum Kanal 6 hin liegenden Position zum Durchlauf frei. In allen anderen Stellungen, so auf dem Hin- und Herfahrweg zwischen den Endlagen wie auch in der vom Kanal 6 abliegenden Position, klemmt jeder der Greifer 13 den ihm zugeordneten Kantenstreifen ununterbrochen. Beim Kantenstreifenwechsel klemmt der in Richtung zum Kanal 6 hin vorgefahrene Greifer 13 den zuvor durch ihn hindurchgezogenen Kantenstreifen und fährt in die vom Kanal 6 abliegende Endposition zurück. Hierbei zieht er diesen Kantenstreifen aus dem Kanal 6 heraus. Danach kommt derjenige Greifer 13 der Schubvorrichtung 12 zum Einsatz, der den als nächstes zu verarbeitenden Kantenstreifen hält. Er fährt damit von der vom Kanal 6 abliegenden Position in die dem Kanal 6 benachbarte Lage und gibt dort die Klemmung des Kantenstreifens frei.

Die Schubvorrichtung 12 ist an einer Führungsplatte 14 angeordnet, an der die Streifenspuren 11 als nach oben und unten offene Schlitze ausgeführt sind. In diesen Schlitzen werden die Greifer 13 geführt, die jeweils mit einem unterhalb der Führungsplatte 14 befindlichen Eigenantrieb verbunden sind. Vor und hinter der Schubvorrichtung 12 sind die Streifenspuren 11 als nach oben offene Nuten ausgebildet. Um die Kantenstreifen gegen ein Herausspringen aus diesen Nuten wie auch aus den Schlitzen der Führungsplatte 14 zu sichern, sind im Bereich der die Streifenspuren 11 bildenden Nuten Niederhalter 15 vorgesehen, die entlang einem kurzen Abschnitt die jeweilige Streifenspur 11 übergreifen.

## Patentansprüche

1. Einrichtung zum Zuführen von unterschiedlichen Kantenstreifen zu einer Kantenstreifen-Anpreßvorrichtung einer Maschine zum Bekanten von plattenförmigen Werkstücken aus Holz und/oder Holzaustauschstoffen in den Schmalflächenbereichen bestehend aus längsseits nebeneinanderliegenden, je einem der einander abwechselnd zu verarbeitenden Kantenstreifen zugeordneten Streifenspuren (11),
**dadurch gekennzeichnet,**
**dass** die Einrichtung weiter einen zu der Anpreßvorrichtung (3) hinführenden Kanal (6) mit einer Einzugsvorrichtung (7) und einer Ablängvorrichtung (8, 9), in den die Streifenspuren (11) münden, und eine im Bereich der Streifenspuren (11) angeordneten Schubvorrichtung (12), mit die Kantenstreifen klemmenden oder freigebenden Greifern (13) aufweist, wobei jeder Greifer (13) der Schubvorrichtung (12) für sich zwischen einer dem zur Anpreßvorrichtung (3) hinführenden Kanal (6) benachbarten Position sowie einer davon abliegenden Position verfahrbar ist und während des Verfahrens sowie in der vom Kanal (6) abliegenden Position den ihm zugeordneten Kantenstreifen dauernd klemmt und den Kantenstreifen nur in der dem Kanal (6) benachbarten Position freigibt.

2. Einrichtung nach Anspruch 1,
**dadurch gekennzeichnet,**
**daß** die Streifenspuren (11) im Bereich der Schubvorrichtung (12) nach oben und unten offene Schlitze in einer Führungsplatte (14) sind, in denen die Greifer (13) geführt sind.

3. Einrichtung nach Anspruch 2,
**dadurch gekennzeichnet,**
**daß** die Streifenspuren (11) vor und hinter der Schubvorrichtung (12) nach oben offene Nuten sind, die von Kantenstreifen-Niederhaltern (15) übergriffen sind.

## Claims

1. Device for supplying different edge strips to an edge strip contact pressing device of a machine for edging plate-type workpieces of wood and/or wood substitutes in the narrow surface area consisting of strip tracks (11) which adjoin one another along their long sides and which are each assigned to one of the edging strips which are to be processed alternately with one another,
**characterised in that** the device further has a channel (6) which leads to the contact pressing device (3) with an infeed device (7) and a cutting device (8, 9) into which the strip tracks (11) open, and a push device (12) which is mounted in the area of the strip tracks (11) with grippers (13) which clamp or release the edge strips, wherein each gripper (13) of the push device (12) can be moved per se between a position adjoining the channel (6) which leads to the contact pressing device (3), and a position remote therefrom, and during movement as well as in the position remote from the channel (6) permanently clamps the edge strip assigned to it, and only releases the edge strip in the position adjoining the channel (6).

2. Device according to claim 1 **characterised in that** the strip tracks (11) in the area of the push device (11) are slits open to the top and bottom in a guide plate (14) in which the grippers (13) are guided.

3. Device according to claim 2 **characterised in that** the strip tracks (11) before and behind the push device (12) are grooves open to the top and engaged by clamps holding down the edge strips (15).

## Revendications

1. Installation d'amenée de différentes bandes de chants à un dispositif de pression de bandes de chants d'une machine destinée à border les surfaces étroites de pièces en forme de panneaux en bois et / ou en matériaux de remplacement du bois, qui consiste en pistes pour bandes de chants (11) qui, disposées longitudinalement, les unes à côté des autres, sont associées chacune à l'une des bandes de chants utilisées alternativement,
**caractérisée en ce que**
ladite installation est pourvue, en outre, d'un canal (6), qui, conduisant au dispositif de pression (3) est pourvu d'un dispositif de traction (7) et d'un dispositif de mise à longueur (8, 9), et dans lequel débouchent les pistes pour bandes de chants (11), et d'un dispositif de poussée (12), qui, disposé dans la zone des pistes pour bandes de chants (11), est doté de dispositifs de pincement (13), qui serrent ou libèrent les bandes de chants, sachant que chaque dispositifs de pincement (13) du dispositif de poussée (12) peut être déplacé individuellement entre une position voisine du canal (6) conduisant au dispositif de pression (3) et une position éloignée de celui-ci, et, pendant le déplacement, ainsi que dans la position éloignée du canal (6), serre en permanence la bande de chant, qui lui est attribuée, et ne délivre ladite bande de chant que dans la position voisine du canal (6).

2. Installation selon la revendication 1, **caractérisée en ce que** les pistes pour bandes de chants (11) sont des fentes, qui, ouvertes vers le haut et vers le bas, dans la région du dispositif de poussée (12), sont pratiquées dans une plaque de guidage (14) et dans lesquelles sont guidées les dispositifs de pincement (13).

3. Installation selon la revendication 2, **caractérisée en ce que** les pistes pour bandes de chants (11) sont des rainures ouvertes vers le haut, en amont et en aval du dispositif de poussée (12), qui sont surmontées par des dispositifs de maintien (15) de bandes de chants.
